# EUROPEAN PATENT SPECIFICATION

(11) **EP 3 527 424 B1**
(45) Date of publication and mention of the grant of the patent: **21.10.2020**
(21) Application number: 18157671.1
(22) Date of filing: 20.02.2018
(51) Int. Cl.: B60N 2/56, B60N 2/42, G08B 21/06, B60N 2/90

(54) **VEHICLE CONTROL SYSTEM COUPLEABLE WITH AT LEAST ONE MUSCULAR STIMULATION DEVICE AND MASSAGE DEVICE**
MIT MINDESTENS EINER MUSKELSTIMULATIONSVORRICHTUNG UND MASSAGEVORRICHTUNG KOPPELBARES FAHRZEUGSTEUERUNGSSYSTEM
SYSTÈME DE COMMANDE DE VÉHICULE POUVANT ÊTRE COUPLÉ AVEC AU MOINS UN DISPOSITIF DE STIMULATION MUSCULAIRE ET DISPOSITIF DE MASSAGE

(43) Date of publication of application: 21.08.2019
(73) Proprietor: Alpine Electronics, Inc., Tokyo (JP)
(72) Inventor: MUENZ, Martina, 70567 Stuttgart (DE); TERRANOVA, Sabine, 70567 Stuttgart (DE)
(74) Representative: Schmitt-Nilson Schraud Waibel Wohlfrom Patentanwälte Partnerschaft mbB

(56) References cited:
- EP-A1- 2 945 133
- WO-A1-01/31604
- US-A1- 2004 201 481
- US-A1- 2013 226 408
- US-B1- 9 135 803

## Description

The present invention relates to vehicle control system coupleable with at least one muscular stimulation device and massage device, and to a vehicle comprising such vehicle control system coupled with at least one muscular stimulation device and massage device.

It is generally known to equip vehicles, particularly seats of such vehicles, with massage and/or muscular stimulations functions, for example by integrating appropriate supports or electrodes in the actual seating surface. However, it is problematic for the user to operate the respective control system in a simple and intuitive manner, especially as the driver must perform the control whilst driving. It is thus often required to establish a compromise between a great variety of controls and the level of detail of the control, and also the level of simplicity in the control. Known systems are frequently complex and laborious to use, which results in the driver's attention being distracted from driving the vehicle.

JP 2009-195595 A discloses a health instrument apparatus mounted on a vehicle capable of always receiving massage of proper intensity in a wide range of situations such that the pressing force of a driver to a seat changes in many situations at the time of running of the vehicle such as during running on a bad road, during acceleration and deceleration or the like even other than during running of the vehicle and during steering running. A control means changes the intensity of the massage due to a massage means corresponding to the vibration of the car body detected by a vibration detecting means. The vehicle's massage apparatus massages the driver to cause him or her to relax during autonomous driving.

JP 2010-076593 A provides an occupant protecting device for an automobile to be favorably used in a vehicle whereon a pre-crash safety system is mounted, capable of reducing the damage of an occupant in a situation a collision is anticipated. The protecting device includes a collision presuming means mounted on the vehicle for presuming a collision of the vehicle, and a muscle stimulating means to contract muscles of the occupant by stimulating the muscles before the collision when the collision is presumed by the collision presuming means.

In JP 2016-106822 A a medical device for a vehicle is described which includes an automatic operation control section for performing an automatic operation of a vehicle, a first electrode (L) and a second electrode (R) arranged to the right and left in a neutral state of a steering wheel of the vehicle. An energization control section is provided for controlling an energization section to allow an appropriate current to flow through a driver. When the vehicle is in an automatic operation by the automatic operation control section, the energization control section controls the energization section to allow the current being a first current value to flow in the first electrode (L) and the second electrode (R). When the vehicle is in a manual operation, the energization control section controls the energization section to allow the current being a second current value smaller than the first current value to flow in the first electrode (L) and the second electrode (R). The massage apparatus changes the current based on the driving mode which includes autonomous/manual mode.

In US 2013/226408 which is considered as the closest prior art, a method of assessing driver behaviour include monitoring vehicle systems.

It is thus an object of the invention to provide a vehicle control system coupleable with at least one muscular stimulation device and massage device which is capable of reducing driver distraction during driving the vehicle and to increase driving safety.

The invention relates to a vehicle control system, and to a vehicle comprising such vehicle control system according to the appended claims.

In a first aspect, there is disclosed a vehicle control system comprising a control device which is configured to be operatively coupled with at least one first sensor device, a second sensor device, a muscular stimulation device, and a massage device. The at least one first sensor device is configured to provide at least one parameter indicative of a body state of a person travelling in the vehicle, the at least one second sensor device is configured to provide at least one parameter indicative of a motion state of the vehicle, the at least one muscular stimulation device is configured to stimulate muscles of the person travelling in the vehicle, and the at least one massage device is configured to massage the person travelling in the vehicle. The control device is further configured to determine from the at least one second sensor device a first vehicle motion state and to operate at least one of the muscular stimulation device and massage device in the first vehicle motion state, to determine from the at least one second sensor device a change from the first vehicle motion state to a second vehicle motion state different from the first vehicle motion state, and to change operation of the at least one of the muscular stimulation device and massage device in response to the determined change of the vehicle motion state from the first vehicle motion state to the second vehicle motion state such that to operate, additionally or alternatively, another one of the muscular stimulation device and massage device not operated in the first vehicle motion state.

In a second aspect, there is disclosed a vehicle control system comprising a control device which is configured to be operatively coupled with at least one first sensor device, a second sensor device, a muscular stimulation device and a massage device. The at least one first sensor device is configured to provide at least one parameter indicative of a body state of a person travelling in the vehicle, the at least one second sensor device is configured to provide at least one parameter indicative of a motion state of the vehicle, the at least one muscular stimulation device is configured to stimulate muscles of the person travelling in the vehicle, and the at least one massage device is configured to massage the person travelling in the vehicle. The control device is further configured to determine from the at least one second sensor device a first vehicle motion state and to operate at least one of the muscular stimulation device and massage device in the first vehicle motion state, to determine from the at least one second sensor device a change from the first vehicle motion state to a second vehicle motion state different from the first vehicle motion state, and to provide a human machine interface in response to the determined change of the vehicle motion state from the first vehicle motion state to the second vehicle motion state, wherein the human machine interface is configured for receiving at least one user's instruction to cause the control device to change operation of the at least one of the muscular stimulation device and massage device such that to operate, additionally or alternatively, another one of the muscular stimulation device and massage device not operated in the first vehicle motion state.

In a further aspect, there is disclosed a vehicle comprising at least one first sensor device configured to provide at least one parameter indicative of a body state of a person travelling in the vehicle, at least one second sensor device configured to provide at least one parameter indicative of a motion state of the vehicle, a muscular stimulation device configured to stimulate muscles of the person travelling in the vehicle, a massage device configured to massage the person travelling in the vehicle, and a vehicle control system as described herein.

The invention thus provides a vehicle control system which may operate at least one muscular stimulation device and massage device in a vehicle such that driver distraction during driving the vehicle may be reduced. Particularly, the vehicle control system is configured to change operation of suitable stimulation and massage devices based on the situation of vehicle motion, so that the driver may be relieved from any complex and laborious control of such stimulation and massage devices in the vehicle. As a result, driving safety may be increased.

According to the first aspect, the control device automatically changes (i.e. without interacting with the user) operation of the at least one of the muscular stimulation device and massage device in response to the determined change of the vehicle motion state from the first vehicle motion state to the second vehicle motion state such that to operate, additionally or alternatively, another one of the muscular stimulation device and massage device not operated in the first vehicle motion state.

According to the second aspect, the control device provides a human machine interface (HMI) in response to the determined change of the vehicle motion state from the first vehicle motion state to the second vehicle motion state. The HMI is configured for receiving at least one user's instruction (e.g. provides a button on a touch screen to be pressed or touched by the user) to cause the control device to change operation of the at least one of the muscular stimulation device and massage device such that to operate, additionally or alternatively, another one of the muscular stimulation device and massage device not operated in the first vehicle motion state. That is, according to the second aspect, the control device proposes to the user, via the HMI, e.g. provided on a display device of the vehicle or acoustically via loudspeaker and microphone, to change the operation of the at least one of the muscular stimulation device and massage device as a result of the determined change of vehicle motion state. The user, for example, is only required to simply press or touch a button displayed with the HMI, or speak "Yes", if the user wants to confirm and change the operation of the at least one of the muscular stimulation device and massage device as a result of the determined change of vehicle motion state.

Generally, a massage device shall be understood to be a device having one or more massage elements which are operated by the control device to relax one or more body portions, specifically one or more muscles or muscle groups, by suitable relaxation impact on the person's body, such as by work and act on the body with pressure, as commonly known in vehicle technology. Such massage elements may be integrated in or put on a respective seat in the vehicle in which the person is seated.

On the other hand, a muscular stimulation device shall be understood to be a device having one or more stimulation elements which are operated by the control device to stimulate one or more body portions, specifically one or more muscles or muscle groups, by stimulus on the person's body, e.g. stimulating one or more muscles or muscle groups by electrical current, as commonly known in vehicle technology. Such stimulus or stimulating may comprise the action of an agent or form of energy (stimuli), such as electrical energy, on body receptors that generate impulses that travel through nerves to the person's brain. Such muscular stimulation device may comprise elements which may be integrated in or put on a respective seat in the vehicle in which the person is seated, or on the steering wheel.

For example, operation of the muscular stimulation device has the effect that the person's muscles harden, whereas operation of the massage device has the effect that the person's muscles may relax.

According to an embodiment, the control device is configured to be operatively coupled with and to operate an electrical muscle stimulation (so-called EMS) device.

According to a further embodiment, the control device is configured to be operatively coupled with and to operate a muscular stimulation device which comprises at least two electrodes arranged on a steering wheel of the vehicle.

According to a further embodiment, the control device is configured to be operatively coupled with a collision estimating device mounted on the vehicle for estimating a collision of the vehicle, wherein the control device is configured to cause the muscular stimulation device to contract the muscles of the person travelling in the vehicle before a vehicle collision detected by the collision estimating device.

According to a further embodiment, the control device is configured to be operatively coupled with and to operate a massage device having a control unit for changing an intensity of the massage corresponding to a vibration of the vehicle body detected by a vibration detecting means.

According to a further embodiment, the control device is configured to be additionally operatively coupled with a heating-cooling device of the vehicle, preferably arranged in a seat of the vehicle in which the user is seated. The control device is configured to operate at least one of the muscular stimulation device, massage device and heating-cooling device in the first vehicle motion state and to automatically change or provide a human machine interface to change, in response to a determined change to the second vehicle motion state, operation of the at least one of the muscular stimulation device, massage device and heating-cooling device such that to operate, additionally or alternatively, another one of the muscular stimulation device, massage device and heating-cooling device not operated in the first vehicle motion state. This embodiment may be applied in connection with, both, the first and second aspect, as described above, i.e. the operation may be changed automatically or manually after presenting an input opportunity to the user via the HMI. Thus, the driver is relieved from controlling three different passenger accommodation devices according to the particular vehicle motion state.

According to an embodiment, the control device is configured to detect from the first sensor device whether the person's muscles are relaxed or hardened, and to operate the muscular stimulation device if the muscles are relaxed and to operate the massage device if the muscles are hardened.

In a particular embodiment, at least one of the first vehicle motion state and second vehicle motion state is indicative of one of a normal driving mode, an autonomous driving mode, an accident situation, a traffic jam situation, or a driving situation with increased vertical or horizontal passenger acceleration compared to the normal driving mode.

According to an embodiment, advantageously, in an accident situation the control device is configured to detect from the first sensor device if the person is asleep, and if so, to operate the muscular stimulation device to harden the person's muscles to reduce an impact on the person's body in a crash situation.

According to further embodiment, in the autonomous driving mode the control device is configured to operate a heating-cooling device of the vehicle to warm or cool down the person's body by the heating-cooling device, preferably arranged in a vehicle seat in which the person is seated.

According to further embodiment, in the driving situation with increased vertical or horizontal passenger acceleration, such as if the road is bumpy or the vehicle drives in a curve, the control device is configured to operate the massage device to support the person's body to not slide in a vehicle seat in which the person is seated.

The present invention can be used, in principle, in any type of vehicle, preferably in a car (automobile) of common type. The control device may be implemented, for example, in an electronic control unit (so-called ECU) of the vehicle, and/or in a head unit of the vehicle. However, the control device may also be implemented as a separate component. According to an embodiment, the control device may be coupled with the respective massage, muscular stimulation and/or heating-cooling device in wired manner or wirelessly.

Aspects of the invention and embodiments will now be described with reference to the following Figures, in which
- Fig. 1: depicts a schematic view of a vehicle including a vehicle control system according to an embodiment of the invention,
- Fig. 2: is a schematic block diagram of a vehicle control system coupled with various components of the vehicle according to an embodiment of the invention,
- Fig. 3: is flow diagram depicting various vehicle motion states and changes from one of the vehicle motion states to another one of the vehicle motion states according to exemplary embodiments.

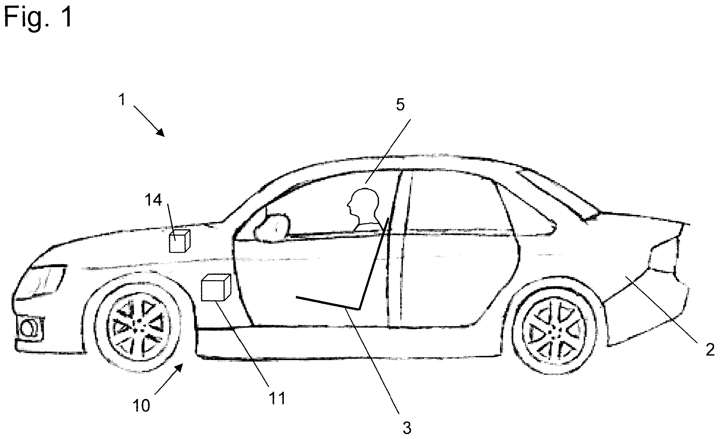

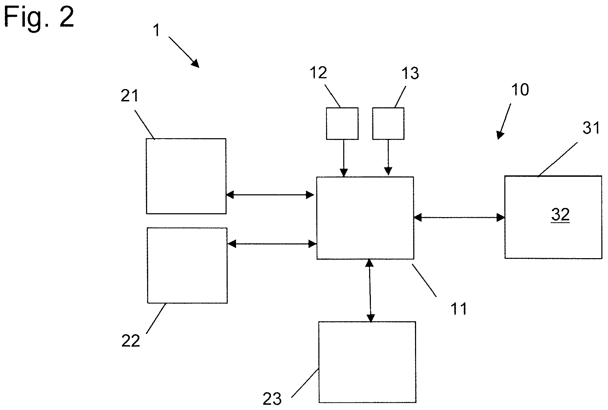

Fig. 2 in combination with Fig. 1 shows a schematic block diagram of a vehicle control system 10 according to an embodiment of the invention and a schematic view of a vehicle 1 including such vehicle control system 10 according to an embodiment of the invention.

According to Fig. 1, the vehicle 1 generally comprises a vehicle chassis 2 and other common components as is known with common vehicles, such as commonly known cars. A human person 5 (also designated herein as "user" or "driver" or "passenger"), such as a driver or passenger, is seated in a front seat 3 of the vehicle 1 and may use a steering wheel (not shown) for driving the vehicle, as is commonly known in the art.

With reference to Fig. 2, the vehicle 1 comprises at least one first sensor device 12 which configured to provide at least one parameter indicative of a body state of a person 5 travelling in the vehicle 1. For example, the at least one first sensor device 12 may be a device for sensing whether the person 5 is asleep (e.g. via measuring any movement of the person's eyes) or does not sufficiently pay attention to the driving of the vehicle (e.g. measuring whether the person's hands are resting on the steering wheel, e.g. by a proximity sensor), as is commonly known in the art, such as in vehicles with autonomous driving mode. The at least one first sensor device 12 may also (additionally or alternatively) include a sensor for measuring any tension of the person's muscles, e.g. as is common with commonly known EMS devices, or a sensor for (directly or indirectly) measuring any acceleration of the person's body, e.g. in vertical and/or horizontal direction, e.g. when the vehicle drives on a bumpy or in a curvy road resulting in high vertical and/or horizontal acceleration of the person's body. The at least one parameter provided by the at least one sensor device 12 is indicative of such respective situation.

The vehicle 1 further comprises at least one second sensor device 13 which is configured to provide at least one parameter indicative of a motion state of the vehicle. For example, the at least one second sensor device may comprise multiple sensors for measuring, e.g., vehicle lateral and/or longitudinal acceleration, vehicle speed, etc., and/or sensors for determining whether the vehicle is in an autonomous driving mode or manual driving mode, and/or sensors such as used with a navigation system for determining whether the vehicle is in a traffic jam, or driving on curvy roads, or the like. Other sensors usually employed in a vehicle may also be used. The at least one parameter provided by the at least one sensor device 13 is indicative of such respective vehicle motion state. A vehicle motion state shall be understood as being a state of the vehicle associated with the motion of the vehicle. For example, a vehicle motion state may be one of: a normal driving mode, an autonomous driving mode, an accident situation, a traffic jam situation, or a driving situation with increased vertical or horizontal passenger acceleration compared to the normal driving mode. Other vehicle motion states may also be used in connection with the present invention.

The vehicle 1 further comprises at least one muscular stimulation device 21, such as an EMS device described above, which is configured to stimulate muscles of the person 5 who is travelling in the vehicle 1. In principle, any known muscular stimulation device which may be used in a vehicle may be employed in connection with the present invention. The vehicle 1 further comprises at least one a massage device 22, such as the ones described above, which is configured to massage the person 5 who travelling in the vehicle 1. In principle, any known massage device which may be used in a vehicle may be employed in connection with the present invention.

In addition, the vehicle 1 comprises a heating-cooling device 23, such as a conventional heating-cooling device as known in common cars for heating and/or cooling the interior passenger space of the car. The heating-cooling device 23 may also be arranged, alternatively or additionally, in the vehicle seat 3 in which the person 5 is seated and may be operated to warm or cool down the person's body by the heating-cooling device 23. Such heating-cooling devices arranged in vehicle seats are also known in the art. In principle, any known heating-cooling device which may be used in a vehicle may be employed in connection with the present invention.

The vehicle 1 further comprises a display device 31, such as a display device employed in common heat units (HU) of a car, which may be implemented, for example, by an appropriate touch screen. On the display device 31, an HMI 32 may be displayed which is configured to receive various user's instructions. For example, the HMI 32 displays various buttons which may be pressed or touched by the user for activating or triggering certain functions associated with the respective displayed button.

Embodiments of the invention comprise a vehicle control system 10 with a control device 11, which may be implemented, at least in part, in the HU of the car, in the ECU of the car, or may be a separate component. According to embodiments, the control device 11 may comprise one or more microprocessors as commonly used in, e.g., vehicle ECUs, HUs, or in other vehicle associated devices, and is coupled with the sensors 12, 13, the muscular stimulation device 21, the massage device 22, the heating-cooling device 23, and the display device 31, e.g., in wired manner or wirelessly, e.g., via an Ethernet-Bus or CAN-Bus. Other suitable wired and/or wireless configurations and connections between these components are also possible. For example, the control device 11 may be a separate unit or may be part of a distributed system, and may be a partially vehicle integrated device. It may also be a control unit of one of the devices 21, 22, 23 which, in addition to their originary function, also employs the functions of the control device 11 as described herein.

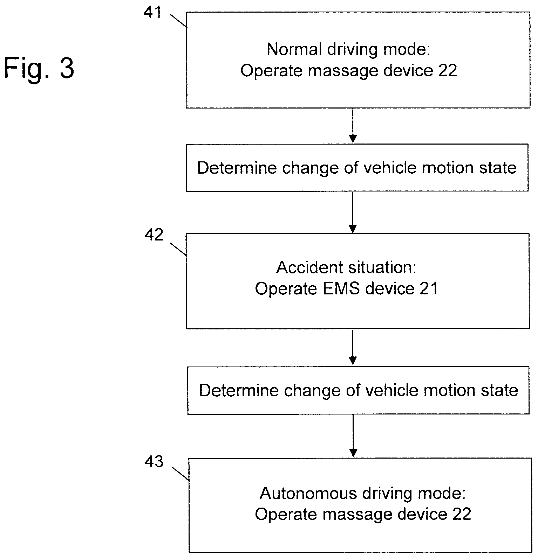

Now referring to the flow diagram of Fig. 3, according to an embodiment, the control device 11 is configured, e.g. through hardware and/or software, to determine from the at least one second sensor device 13 a vehicle motion state. For example, the control device 11 determines that the vehicle is in a vehicle motion state 41 indicative of a normal driving mode. In such vehicle motion state 41, the control device 11 operates at least one of the muscular stimulation device 21 and massage device 22. In this example, the control device 11 operates the massage device 22 to massage the person 5 seating in the seat 3. For example, the control device 11 operates particular massage means which are integrated in the seating area and/or backrest of the seat 3, as is commonly known in the art.

The vehicle, when in normal driving mode, may then undergo a change of the vehicle motion state. For example, the vehicle may proceed into an accident situation in which a sharp braking movement or a crashing event may occur. The control device 11 determines from the at least one second sensor device 13 (which includes, e.g., an accelerometer detecting such high deceleration) such a change from the vehicle motion state 41 to another vehicle motion state 42 which is indicative of such accident situation.

According to anther embodiment, the control device 11 is operatively coupled with a collision estimating device 14 mounted on the vehicle 1 and which is configured for estimating a collision of the vehicle. For example, the collision estimating device may be one as disclosed in JP 2010-076593 A. According to another embodiment, the collision estimating device may comprise an accelerometer as mentioned above. The control device 11, for example, then causes the muscular stimulation device 21 to contract the muscles of the person 5 immediately before a vehicle collision detected by the collision estimating device 14.

As a result of such determination, according to an embodiment, in response to the determined change of the vehicle motion state from the normal driving mode 41 to the accident situation 42, the control device 11 automatically changes the operation such that to operate, additionally or alternatively, the muscular stimulation device 21 which was not operated in the vehicle motion state 41. For example, the muscular stimulation device 21 is operated to contract particular muscles of the person 5 by stimulating the muscles during the braking movement or immediately before the collision to protect the body from greater injuries.

Afterwards, the vehicle may then undergo another change of the vehicle motion state. For example, the vehicle may change, after a previous sharp braking movement, to a vehicle motion state 43 which is indicative of an autonomous driving mode. In this motion state, the control device 11 may again activate the massage device 22 not operated in the vehicle motion state 42.

Analogous procedures may also be performed with the heating-cooling device 23 in combination with the muscular stimulation and/or massage device 21, 22 in these or other vehicle motion states.

Alternatively or additionally to the automatic change of operation upon determining a change of the vehicle motion state, according to another embodiment, the control device 11 may provide an HMI 32 in response to the determined change of the vehicle motion state. For example, the HMI 32 provides a button on the display screen 31 for receiving at least one user's instruction (e.g., receiving a user's touch when pressing the button) which then causes the control device 11 to change operation such that to operate, additionally or alternatively, for instance, the muscular stimulation device 21 not operated in the preceding vehicle motion state. Consequently, when the user presses the button, the operation will be changed by the control device 11 from, e.g., the massage device 22 to the EMS device 21. In the embodiment of Fig. 3, for example, the HMI 32 presents a button to the user to change operation from the EMS device 21 to the massage device 22 when detecting a change of the vehicle motion state to the autonomous driving mode 43.

According to embodiments of the invention, the following advantageous operations may be performed alone or in combination with other embodiments as disclosed herein:
In one embodiment, the control device 11 detects from the sensor device 12 whether the person's muscles are relaxed or hardened, and operates the muscular stimulation device 21 if the muscles are relaxed, and operates the massage device 22 if the muscles are hardened.

In a further embodiment, in an accident situation, the control device 11 detects from the first sensor device 12 if the person is asleep, and if so, operates the muscular stimulation device 21 to harden the person's muscles to reduce a potential impact on the person's body in an accident situation.

In another embodiment, in an autonomous driving mode, the control device 11 operates the heating-cooling device 23 to warm or cool down the person's body by the heating-cooling device, which is preferably arranged in the vehicle seat 3. It may also operate the massage device 22 so that the person may relax in the autonomous driving mode at the appropriate temperature.

In a driving situation with increased vertical or horizontal passenger acceleration (e.g. on a bumpy and/or curvy road) the control device 11 may operate the massage device 22 to support the person's body to not slide in the vehicle seat 3.

Since the person, e.g. the driver of the vehicle, is relieved from all these decisions when the vehicle motion state changes, and does not need to operate complicated input menus of the respective massage, stimulation and heating-cooling devices, the driving safety may be significantly increased.

## Claims

1. A vehicle control system (10) comprising
- a control device (11) which is configured to be operatively coupled with at least one first sensor device (12), a second sensor device (13), a muscular stimulation device (21), and a massage device (22), wherein the at least one first sensor device (12) is configured to provide at least one parameter indicative of a body state of a person (5) travelling in the vehicle (1), the at least one second sensor device (13) is configured to provide at least one parameter indicative of a motion state (41, 42, 43) of the vehicle (1), the at least one muscular stimulation device (21) is configured to stimulate muscles of the person (5) travelling in the vehicle (1), and the at least one massage device (22) is configured to massage the person (5) travelling in the vehicle (1),
- wherein the control device (11) is further configured to
- determine from the at least one second sensor device (13) a first vehicle motion state (41) and to operate at least one of the muscular stimulation device (21) and massage device (22) in the first vehicle motion state (41),
- determine from the at least one second sensor device (13) a change from the first vehicle motion state (41) to a second vehicle motion state (42) different from the first vehicle motion state (41), and
- change operation of the at least one of the muscular stimulation device (21) and massage device (22) in response to the determined change of the vehicle motion state from the first vehicle motion state (41) to the second vehicle motion state (42) such that to operate, additionally or alternatively, another one of the muscular stimulation device (21) and massage device (22) not operated in the first vehicle motion state (41).

2. A vehicle control system (10) comprising
- a control device (11) which is configured to be operatively coupled with at least one first sensor device (12), a second sensor device (13), a muscular stimulation device (21) and a massage device (22), wherein the at least one first sensor device (12) is configured to provide at least one parameter indicative of a body state of a person (5) travelling in the vehicle (1), the at least one second sensor device (13) is configured to provide at least one parameter indicative of a motion state (41, 42, 43) of the vehicle (1), the at least one muscular stimulation device (21) is configured to stimulate muscles of the person (5) travelling in the vehicle (1), and the at least one massage device (22) is configured to massage the person (5) travelling in the vehicle (1),
- wherein the control device (11) is further configured to
- determine from the at least one second sensor device (13) a first vehicle motion state (41) and to operate at least one of the muscular stimulation device (21) and massage device (22) in the first vehicle motion state (41),
- determine from the at least one second sensor device (13) a change from the first vehicle motion state (41) to a second vehicle motion state (42) different from the first vehicle motion state (41), and
- provide a human machine interface (32) in response to the determined change of the vehicle motion state from the first vehicle motion state (41) to the second vehicle motion state (42), wherein the human machine interface (32) is configured for receiving at least one user's instruction to cause the control device (11) to change operation of the at least one of the muscular stimulation device (21) and massage device (22) such that to operate, additionally or alternatively, another one of the muscular stimulation device (21) and massage device (22) not operated in the first vehicle motion state (41).

3. The vehicle control system according to claim 1 or 2, wherein the control device (11) is configured to be operatively coupled with and to operate an electrical muscle stimulation, EMS, device (21).

4. The vehicle control system according to one of claims 1 to 3, wherein the control device (11) is configured to be operatively coupled with and to operate a muscular stimulation device (21) which comprises at least two electrodes arranged on a steering wheel of the vehicle (1).

5. The vehicle control system according to one of claims 1 to 4, wherein the control device (11) is configured to be operatively coupled with a collision estimating device (14) mounted on the vehicle (1) for estimating a collision of the vehicle, the control device (11) configured to cause the muscular stimulation device (21) to contract the muscles of the person (5) travelling in the vehicle (1) before a vehicle collision detected by the collision estimating device (14).

6. The vehicle control system according to one of claims 1 to 5, wherein the control device (11) is configured to be operatively coupled with and to operate a massage device (22) having a control unit for changing an intensity of the massage corresponding to a vibration of the vehicle body (2) detected by a vibration detecting means.

7. The vehicle control system according to one of claims 1 to 6, wherein
- the control device (11) is configured to be operatively coupled with a heating-cooling device (23) of the vehicle (1), preferably arranged in a vehicle seat (3) in which the person (5) is seated, and
- the control device (11) is configured to operate at least one of the muscular stimulation device (21), massage device (22) and heating-cooling device (23) in the first vehicle motion state (41) and to automatically change or provide a human machine interface (32) to change, in response to a determined change to the second vehicle motion state (42), operation of the at least one of the muscular stimulation device (21), massage device (22) and heating-cooling device (23) such that to operate, additionally or alternatively, another one of the muscular stimulation device (21), massage device (22) and heating-cooling device (23) not operated in the first vehicle motion state (41).

8. The vehicle control system according to one of claims 1 to 7, wherein the control device (11) is configured to detect from the first sensor device (12) whether the person's muscles are relaxed or hardened, and to operate the muscular stimulation device (21) if the muscles are relaxed and to operate the massage device (22) if the muscles are hardened.

9. The vehicle control system according to one of claims 1 to 8, wherein at least one of the first vehicle motion state (41) and second vehicle motion state (42) is indicative of one of a normal driving mode, an autonomous driving mode, an accident situation, a traffic jam situation, or a driving situation with increased vertical or horizontal passenger acceleration compared to the normal driving mode.

10. The vehicle control system according to claim 9, wherein in an accident situation the control device (11) is configured to detect from the first sensor device (12) if the person is asleep, and if so, to operate the muscular stimulation device (21) to harden the person's muscles to reduce an impact on the person's body in a crash situation.

11. The vehicle control system according to one of claims 9 or 10, wherein in the autonomous driving mode the control device (11) is configured to operate a heating-cooling device (23) of the vehicle (1) to warm or cool down the person's body by the heating-cooling device (23), preferably arranged in a vehicle seat (3) in which the person (5) is seated.

12. The vehicle control system according to one of claims 9 to 11, wherein in the driving situation with increased vertical or horizontal passenger acceleration the control device (11) is configured to operate the massage device (22) to support the person's body to not slide in a vehicle seat (3) in which the person (5) is seated.

13. A vehicle (1) comprising
- at least one first sensor device (12) configured to provide at least one parameter indicative of a body state of a person (5) travelling in the vehicle (1),
- at least one second sensor device (13) configured to provide at least one parameter indicative of a motion state (41, 42, 43) of the vehicle,
- a muscular stimulation device (21) configured to stimulate muscles of the person (5) travelling in the vehicle (1),
- a massage device (22) configured to massage the person (5) travelling in the vehicle (1), and
- a vehicle control system (10) according to one of the preceding claims.

## Patentansprüche

1. Fahrzeugsteuerungssystem (10), aufweisend
- eine Steuervorrichtung (11), die dazu ausgebildet ist, mit mindestens einer ersten Sensorvorrichtung (12), einer zweiten Sensorvorrichtung (13), einer Muskeistimulationsvorrichtung (21) und einer Massagevorrichtung (22) betriebsmäßig gekoppelt zu werden, wobei die mindestens eine erste Sensorvorrichtung (12) dazu ausgebildet ist, mindestens einen Parameter bereitzustellen, der einen Körperzustand einer Person (5) anzeigt, die in dem Fahrzeug (1) fährt, wobei die mindestens eine zweite Sensorvorrichtung (13) dazu ausgebildet ist, mindestens einen Parameter bereitzustellen, der einen Bewegungszustand (41, 42, 43) des Fahrzeugs (1) anzeigt, wobei die mindestens eine Muskelstimulationsvorrichtung (21) dazu ausgebildet ist, Muskeln der Person (5) zu stimulieren, die in dem Fahrzeug fährt (1), und wobei die mindestens eine Massagevorrichtung (22) dazu ausgebildet ist, die in dem Fahrzeug (1) fahrende Person (5) zu massieren,
- wobei die Steuervorrichtung (11) ferner dazu ausgebildet ist,
- von der mindestens einen zweiten Sensorvorrichtung (13) einen ersten Fahrzeugbewegungszustand (41) festzustellen und mindestens eine von der Muskelstimulationsvorrichtung (21) und der Massagevorrichtung (22) in dem ersten Fahrzeugbewegungszustand (41) zu betreiben,
- von der mindestens einen zweiten Sensorvorrichtung (13) einen Wechsel von dem ersten Fahrzeugbewegungszustand (41) in einen zweiten Fahrzeugbewegungszustand (42) festzustellen, der sich von dem ersten Fahrzeugbewegungszustand (41) unterscheidet, und
- den Betrieb der mindestens einen von der Muskelstimulationsvorrichtung (21) und der Massagevorrichtung (22) in Reaktion auf die festgestellte Änderung des Fahrzeugbewegungszustands von dem ersten Fahrzeugbewegungszustand (41) in den zweiten Fahrzeugbewegungszustand (42) derart zu ändern, dass zusätzlich oder alternativ eine weitere von der Muskelstimulationsvorrichtung (21) und der Massagevorrichtung (22) betrieben wird, die in dem ersten Fahrzeugbewegungszustand (41) nicht betrieben wird.

2. Fahrzeugsteuerungssystem (10), aufweisend
- eine Steuervorrichtung (11), die dazu ausgebildet ist, mit mindestens einer ersten Sensorvorrichtung (12), einer zweiten Sensorvorrichtung (13), einer Muskelstimulationsvorrichtung (21) und einer Massagevorrichtung (22) betriebsmäßig gekoppelt zu werden, wobei die mindestens eine erste Sensorvorrichtung (12) dazu ausgebildet ist, mindestens einen Parameter bereitzustellen, der einen Körperzustand einer Person (5) anzeigt, die in dem Fahrzeug (1) fährt, wobei die mindestens eine zweite Sensorvorrichtung (13) dazu ausgebildet ist, mindestens einen Parameter bereitzustellen, der einen Bewegungszustand (41, 42, 43) des Fahrzeugs (1) anzeigt, wobei die mindestens eine Muskelstimulationsvorrichtung (21) dazu ausgebildet ist, Muskeln der Person (5) zu stimulieren, die in dem Fahrzeug fährt (1), und wobei die mindestens eine Massagevorrichtung (22) dazu ausgebildet ist, die in dem Fahrzeug (1) fahrende Person (5) zu massieren,
- wobei die Steuervorrichtung (11) ferner dazu ausgebildet ist,
- von der mindestens einen zweiten Sensorvorrichtung (13) einen ersten Fahrzeugbewegungszustand (41) festzustellen und mindestens eine von der Muskelstimulationsvorrichtung (21) und der Massagevorrichtung (22) in dem ersten Fahrzeugbewegungszustand (41) zu betreiben,
- von der mindestens einen zweiten Sensorvorrichtung (13) einen Wechsel von dem ersten Fahrzeugbewegungszustand (41) in einen zweiten Fahrzeugbewegungszustand (42) festzustellen, der sich von dem ersten Fahrzeugbewegungszustand (41) unterscheidet, und
- eine Mensch-Maschine-Schnittstelle (32) in Reaktion auf die festgestellte Änderung des Fahrzeugbewegungszustands von dem ersten Fahrzeugbewegungszustand (41) in den zweiten Fahrzeugbewegungszustand (42) bereitzustellen, wobei die Mensch-Maschine-Schnittstelle (32) dazu ausgebildet ist, eine Anweisung mindestens eines Benutzers zu empfangen, um die Steuervorrichtung (11) zu veranlassen, den Betrieb der mindestens einen von der Muskelstimulationsvorrichtung (21) und der Massagevorrichtung (22) derart zu ändern, dass zusätzlich oder alternativ eine weitere von der Muskelstimulationsvorrichtung (21) und der Massagevorrichtung (22) betrieben wird, die in dem ersten Fahrzeugbewegungszustand (41) nicht betrieben wird.

3. Fahrzeugsteuerungssystem nach Anspruch 1 oder 2,
wobei die Steuervorrichtung (11) dazu ausgebildet ist, mit einer elektrischen Muskelstimulations- (EMS-) Vorrichtung (21) betriebsmäßig gekoppelt zu werden und diese zu betreiben.

4. Fahrzeugsteuerungssystem nach einem der Ansprüche 1 bis 3,
wobei die Steuervorrichtung (11) dazu ausgebildet ist, mit einer Muskelstimulationsvorrichtung (21) betriebsmäßig gekoppelt zu werden und diese zu betreiben, die mindestens zwei Elektroden aufweist, die an einem Lenkrad des Fahrzeugs (1) angeordnet sind.

5. Fahrzeugsteuerungssystem nach einem der Ansprüche 1 bis 4,
wobei die Steuervorrichtung (11) dazu ausgebildet ist, mit einer Kollisionsschätzvorrichtung (14) betriebsmäßig gekoppelt zu werden, die an dem Fahrzeug (1) angebracht ist, um eine Kollision des Fahrzeugs abzuschätzen, wobei die Steuervorrichtung (11) dazu ausgebildet ist, die Muskelstimulationsvorrichtung (21) zu veranlassen, die Muskeln der in dem Fahrzeug (1) fahrenden Person (5) vor einer von der Kollisionsschätzvorrichtung (14) detektierten Fahrzeugkollision anzuspannen.

6. Fahrzeugsteuerungssystem nach einem der Ansprüche 1 bis 5,
wobei die Steuervorrichtung (11) dazu ausgebildet ist, mit einer Massagevorrichtung (22) betriebsmäßig gekoppelt zu werden und diese zu betreiben, die eine Steuereinheit zum Ändern einer Intensität der Massage entsprechend einer Vibration der Fahrzeugkarosserie (2) aufweist, die von einer Vibrationserfassungseinrichtung erfasst wird.

7. Fahrzeugsteuerungssystem nach einem der Ansprüche 1 bis 6,
wobei
- die Steuervorrichtung (11) dazu ausgebildet ist, mit einer Heiz-Kühl-Vorrichtung (23) des Fahrzeugs (1) betriebsmäßig gekoppelt zu werden, die vorzugsweise in einem Fahrzeugsitz (3) angeordnet ist, auf dem die Person (5) sitzt, und
- die Steuervorrichtung (11) dazu ausgebildet ist, mindestens eine von der Muskelstimulationsvorrichtung (21), der Massagevorrichtung (22) und der Heiz-Kühl-Vorrichtung (23) in dem ersten Fahrzeugbewegungszustand (41) zu betreiben und eine automatische Änderung oder eine Mensch-Maschine-Schnittstelle (32) für die Änderung bereitzustellen, um in Reaktion auf eine festgestellte Änderung in dem zweiten Fahrzeugbewegungszustand (42) den Betrieb der mindestens einen von der Muskelstimulationsvorrichtung (21), der Massagevorrichtung (22) und der Heiz-Kühl-Vorrichtung (23) derart zu ändern, dass zusätzlich oder alternativ eine weitere von der Muskelstimulationsvorrichtung (21), der Massagevorrichtung (22) und der Heiz-Kühl-Vorrichtung (23) betrieben wird, die in dem ersten Fahrzeugbewegungszustand (41) nicht betrieben wird.

8. Fahrzeugsteuerungssystem nach einem der Ansprüche 1 bis 7,
wobei die Steuervorrichtung (11) dazu ausgebildet ist, von der ersten Sensorvorrichtung (12) zu erfassen, ob die Muskeln der Person entspannt oder verhärtet sind, und die Muskelstimulationsvorrichtung (21) zu betreiben, wenn die Muskeln entspannt sind, sowie die Massagevorrichtung (22) zu betreiben, wenn die Muskeln verhärtet sind.

9. Fahrzeugsteuerungssystem nach einem der Ansprüche 1 bis 8,
wobei mindestens einer von dem ersten Fahrzeugbewegungszustand (41) und dem zweiten Fahrzeugbewegungszustand (42) eines von einem normalen Fahrmodus, einem autonomen Fahrmodus, einer Unfallsituation, einer Verkehrsstausituation oder einer Fahrsituation mit erhöhter vertikaler oder horizontaler Fahrgastbeschleunigung im Vergleich zu dem normalen Fahrmodus anzeigt.

10. Fahrzeugsteuerungssystem nach Anspruch 9,
wobei in einer Unfallsituation die Steuervorrichtung (11) dazu ausgebildet ist, von der ersten Sensorvorrichtung (12) zu erfassen, ob die Person schläft, und wenn ja, die Muskelstimulationsvorrichtung (21) zu betreiben, um die Muskeln der Person zu hart werden zu lassen, um die Auswirkungen auf den Körper der Person in einer Crash-Situation zu verringern.

11. Fahrzeugsteuerungssystem nach einem der Ansprüche 9 oder 10,
wobei in dem autonomen Fahrmodus die Steuervorrichtung (11) dazu ausgebildet ist, eine Heiz-Kühl-Vorrichtung (23) des Fahrzeugs (1) zu betreiben, um den Körper der Person mittels der Heiz-Kühl-Vorrichtung (23) zu erwärmen oder abzukühlen, die vorzugsweise in einem Fahrzeugsitz (3) angeordnet ist, auf dem die Person (5) sitzt.

12. Fahrzeugsteuerungssystem nach einem der Ansprüche 9 bis 11,
wobei in der Fahrsituation mit erhöhter vertikaler oder horizontaler Fahrgastbeschleunigung die Steuervorrichtung (11) dazu ausgebildet ist, die Massagevorrichtung (22) zu betreiben, um den Körper der Person so zu unterstützen, dass dieser nicht auf einem Fahrzeugsitz (3) verrutscht, auf dem die Person (5) sitzt.

13. Fahrzeug (1), aufweisend:
- mindestens eine erste Sensorvorrichtung (12), die dazu ausgebildet ist, mindestens einen Parameter bereitzustellen, der einen Körperzustand einer in dem Fahrzeug (1) fahrenden Person (5) anzeigt,
- mindestens eine zweite Sensorvorrichtung (13), die dazu ausgebildet ist, mindestens einen Parameter bereitzustellen, der einen Bewegungszustand (41, 42, 43) des Fahrzeugs anzeigt,
- eine Muskelstimulationsvorrichtung (21), die dazu ausgebildet ist, Muskeln der Person (5) zu stimulieren, die in dem Fahrzeug (1) fährt,
- eine Massagevorrichtung (22), die dazu ausgebildet ist, die in dem Fahrzeug (1) fahrende Person (5) zu massieren, und
- ein Fahrzeugsteuerungssystem (10) nach einem der vorhergehenden Ansprüche.

## Revendications

1. Système de commande de véhicule (10) qui comprend :
- un dispositif de commande (11) qui est configuré pour être 5couplé de manière opérationnelle avec au moins un premier dispositif (12) faisant office de capteur, avec un deuxième dispositif (13) faisant office de capteur, avec un dispositif de stimulation musculaire (21) et avec un dispositif de massage (22) ; dans lequel ledit au moins un premier dispositif (12) faisant office de capteur est configuré pour procurer au moins un paramètre qui est révélateur d'un état corporel d'une personne (5) en itinérance dans le véhicule (1), ledit au moins un deuxième dispositif (13) faisant office de capteur est configuré pour procurer au moins un paramètre qui est révélateur d'un état de mouvement (41, 42, 43) du véhicule (1), ledit au moins un dispositif de stimulation musculaire (21) est configuré pour stimuler des muscles de la personne (5) en itinérance dans le véhicule (1), et ledit au moins un dispositif de massage (22) est configuré pour le massage de la personne (5) en itinérance dans le véhicule (1) ;
- dans lequel le dispositif de commande (11) est en outre configuré :
- pour déterminer, à partir dudit au moins un deuxième dispositif (13) faisant office de capteur, un premier état de mouvement du véhicule (41) et pour activer au moins un dispositif choisi parmi le dispositif de stimulation musculaire (21) et le dispositif de massage (22) dans le premier état de mouvement du véhicule (41) ;
- pour déterminer à partir dudit au moins un deuxième dispositif (13) faisant office de capteur, un changement d'état qui passe du premier état de mouvement du véhicule (41) à un deuxième état de mouvement du véhicule (42) qui est différent du premier état de mouvement du véhicule (41) ; et
- pour modifier l'activation dudit au moins un dispositif choisi parmi le dispositif de stimulation musculaire (21) et le dispositif de massage (22) en réponse au changement déterminé de l'état de mouvement du véhicule qui passe du premier état de mouvement du véhicule (41) au deuxième état de mouvement du véhicule (42), de manière à activer, de façon supplémentaire ou en variante, un autre dispositif choisi parmi le dispositif de stimulation musculaire (21) et le dispositif de massage (22) qui n'a pas été activé dans le premier état de mouvement du véhicule (41).

2. Système de commande de véhicule (10) qui comprend :
- un dispositif de commande (11) qui est configuré pour être couplé de manière opérationnelle avec au moins un premier dispositif (12) faisant office de capteur, avec un deuxième dispositif (13) faisant office de capteur, avec un dispositif de stimulation musculaire (21) et avec un dispositif de massage (22) ; dans lequel ledit au moins un premier dispositif (12) faisant office de capteur est configuré pour procurer au moins un paramètre qui est révélateur d'un état corporel d'une personne (5) en itinérance dans le véhicule (1), ledit au moins un deuxième dispositif (13) faisant office de capteur est configuré pour procurer au moins un paramètre qui est révélateur d'un état de mouvement (41, 42, 43) du véhicule (1), ledit au moins un dispositif de stimulation musculaire (21) est configuré pour stimuler des muscles de la personne (5) en itinérance dans le véhicule (1), et ledit au moins un dispositif de massage (22) est configuré pour le massage de la personne (5) en itinérance dans le véhicule (1) ;
- dans lequel le dispositif de commande (11) est en outre configuré :
- pour déterminer, à partir dudit au moins un deuxième dispositif (13) faisant office de capteur, un premier état de mouvement du véhicule (41) et pour activer au moins un dispositif choisi parmi le dispositif de stimulation musculaire (21) et le dispositif de massage (22) dans le premier état de mouvement du véhicule (41) ;
- pour déterminer à partir dudit au moins un deuxième dispositif (13) faisant office de capteur, un changement d'état qui passe du premier état de mouvement du véhicule (41) à un deuxième état de mouvement du véhicule (42) qui est différent du premier état de mouvement du véhicule (41) ; et
- pour procurer une interface humain-machine (32) en réponse au changement déterminé de l'état de mouvement du véhicule qui passe du premier état de mouvement du véhicule (41) au deuxième état de mouvement du véhicule (42) ; dans lequel l'interface humain-machine (32) est configurée pour recevoir au moins une instruction d'utilisateur pour faire en sorte que le dispositif de commande (11) modifie l'activation dudit au moins un dispositif choisi parmi le dispositif de stimulation musculaire (21) et le dispositif de massage (22), de manière à activer, de façon supplémentaire ou en variante, un autre dispositif choisi parmi le dispositif de stimulation musculaire (21) et le dispositif de massage (22) qui n'a pas été activé dans le premier état de mouvement du véhicule (41).

3. Système de commande de véhicule selon la revendication 1 ou 2, dans lequel le dispositif de commande (11) est configuré 90pour être couplé de manière opérationnelle avec un dispositif électrique de stimulation musculaire, EMS (21) et pour activer le dispositif en question.

4. Système de commande de véhicule selon l'une quelconque des revendications 1 à 3, dans lequel le dispositif de commande (11) est configuré pour être couplé de manière opérationnelle avec un dispositif de stimulation musculaire (21) qui comprend au moins deux électrodes qui sont montées sur une roue directrice du véhicule (1), et pour activer le dispositif en question.

5. Système de commande de véhicule selon l'une quelconque des revendications 1 à 4, dans lequel le dispositif de commande (11) est configuré pour être couplé de manière opérationnelle avec un dispositif d'estimation de collision (14) qui est monté sur le véhicule (1) afin d'estimer une collision du véhicule, le dispositif de commande (11) étant configuré pour faire en sorte que le dispositif de stimulation musculaire (21) contracte les muscles de la personne (5) en itinérance dans le véhicule (1) avant une collision de véhicule qui a été détectée par le dispositif d'estimation de collision (14).

6. Système de commande de véhicule selon l'une quelconque des revendications 1 à 5, dans lequel le dispositif de commande (11) est configuré pour être couplé de manière opérationnelle avec un dispositif de massage (22) qui possède une unité de commande destinée à modifier une intensité du massage de manière correspondante à une vibration de la carrosserie (2) du véhicule, qui est détectée par un moyen de détection de vibration, et pour activer le dispositif en question.

7. Système de commande de véhicule selon l'une quelconque des revendications 1 à 6, dans lequel :
- le dispositif de commande (11) est configuré pour être couplé de manière opérationnelle avec un dispositif de chauffage-refroidissement (23) du véhicule (1), disposé de préférence dans un siège (3) du véhicule sur lequel est assis la personne (5) ; et
- le dispositif de commande (11) est configuré pour activer au moins un dispositif choisi parmi le dispositif de stimulation musculaire (21), le dispositif de massage (22) et le dispositif de chauffage-refroidissement (23) dans le premier état de mouvement du véhicule (41) et pour modifier ou pour procurer de manière automatique une interface humain-machine (32) dans le but de modifier, en réponse à un changement déterminé apporté au deuxième état de mouvement du véhicule (42), l'activation dudit au moins un dispositif choisi parmi le dispositif de stimulation musculaire (21), le dispositif de massage (22) et le dispositif de chauffage-refroidissement (23), de manière à activer, de façon supplémentaire ou en variante, un autre dispositif choisi parmi le dispositif de stimulation musculaire (21), le dispositif de massage (22) et le dispositif de chauffage-refroidissement (23) qui n'a pas été activé dans le premier état de mouvement du véhicule (41).

8. Système de commande de véhicule selon l'une quelconque des revendications 1 à 7, dans lequel le dispositif de commande (11) est configuré pour détecter, à partir du premier dispositif (12) faisant office de capteur, le fait de savoir si les muscles de la personne sont relâchés ou tendus, et pour activer le dispositif de stimulation musculaire (21) lorsque les muscles sont relâchés et pour activer le dispositif de massage (22) lorsque les muscles sont tendus.

9. Système de commande de véhicule selon l'une quelconque des revendications 1 à 8, dans lequel au moins un état choisi parmi le premier état de mouvement du véhicule (41) et le deuxième état de mouvement du véhicule (42) est révélateur d'un mode choisi parmi un mode de conduite normale, un mode de conduite autonome, une situation d'accident, une situation d'embouteillage, ou une situation de conduite qui va de pair avec une augmentation de l'accélération verticale ou horizontale des passagers par rapport au mode de conduite normale.

10. Système de commande de véhicule selon la revendication 9, dans lequel, dans une situation d'accident, le dispositif de commande (11) est configuré pour détecter, à partir du premier dispositif (12) faisant office de capteur, le fait de savoir si la personne est endormie, et si tel est le cas, pour activer le dispositif de stimulation musculaire (21) dans le but de raidir les muscles de la personne afin de réduire un impact sur le corps de la personne dans une situation de collision.

11. Système de commande de véhicule selon l'une quelconque des revendications 9 ou 10, dans lequel, dans le mode de conduite autonome, le dispositif de commande (11) est configuré pour activer un dispositif de chauffage-refroidissement (23) du véhicule (1) dans le but de réchauffer ou de refroidir le corps de la personne par l'intermédiaire du dispositif de chauffage-refroidissement (23), disposé de préférence dans un siège du véhicule (3) sur lequel la personne (5) est assise.

12. Système de commande de véhicule selon l'une quelconque des revendications 9 à 11, dans lequel, dans la situation de conduite qui va de pair avec une augmentation de l'accélération verticale ou horizontale des passagers, le dispositif de commande (11) est configuré pour activer le dispositif de massage (22) dans le but de supporter le corps de la personne afin de l'empêcher de glisser dans un siège (3) du véhicule sur lequel est assise la personne (5).

13. Véhicule (1) qui comprend :
- au moins un premier dispositif (12) faisant office de capteur qui est configuré pour procurer au moins un paramètre révélateur d'un état corporel d'une personne (5) en itinérance dans le véhicule (1) ;
- au moins un deuxième dispositif (13) faisant office de capteur qui est configuré pour procurer au moins un paramètre révélateur d'un état de mouvement (41, 42, 43) du véhicule ;
- un dispositif de stimulation musculaire (21) qui est configuré pour stimuler des muscles de la personne (5) en itinérance dans le véhicule (1) ;
- un dispositif de massage (22) qui est configuré pour le massage de la personne (5) en itinérance dans le véhicule (1) ; et
- un système de commande de véhicule (10) selon l'une quelconque des revendications précédentes.
